(19) Europäisches Patentamt
European Patent Office
Office européen des brevets

(11) **EP 3 159 679 A1**

(12) **EUROPEAN PATENT APPLICATION**

(43) Date of publication:
**26.04.2017 Bulletin 2017/17**

(51) Int Cl.:
**G01N 21/896** $^{(2006.01)}$    **G01N 21/47** $^{(2006.01)}$
**G01N 21/59** $^{(2006.01)}$    **G01N 21/958** $^{(2006.01)}$
**G01N 21/892** $^{(2006.01)}$

(21) Application number: **16192960.9**

(22) Date of filing: **07.10.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.10.2015 US 201514887057**

(71) Applicant: **Honeywell International Inc.**
**Morris Plains, NJ 07950 (US)**

(72) Inventors:
• **SHAKESPEARE, John F**
**Morris Plains, NJ New Jersey 07950 (US)**
• **SHAKESPEARE, Tarja T**
**Morris Plains, NJ New Jersey 07950 (US)**

(74) Representative: **Houghton, Mark Phillip**
**Patent Outsourcing Limited**
**1 King Street**
**Bakewell, Derbyshire DE45 1DZ (GB)**

(54) **APPARATUS AND METHOD FOR MEASURING HAZE OF SHEET MATERIALS OR OTHER MATERIALS USING OFF-AXIS DETECTOR**

(57)    A method includes illuminating (902) a material (102, 202, 302) with first light (108, 208, 308, 504, 604, 802) along an optical path. The method also includes capturing (904) an image (400, 450, 480, 700, 750) of second light (114-116, 214-216, 314-316, 804, 808, 814, 816, 822) transmitted through the material using a first detector (118, 218, 318, 806, 812, 820, 826, 830), where a first portion of the second light follows the optical path of the first light and a second portion of the second light diverges from the optical path. The method further includes capturing (906) one or more measurements of third light (126, 226, 326) using a second detector (124, 224, 324, 821). The third light diverges from the optical path by a larger amount than the second portion of the second light, and the second detector is spaced apart from the first detector. In addition, the method includes determining (912) one or more haze values associated with the material based on the image and the one or more measurements and at least one of storing and outputting (912) the one or more haze values.

FIGURE 1

**Description**

TECHNICAL FIELD

This disclosure relates generally to measurement systems. More specifically, this disclosure relates to an apparatus and method for measuring haze of sheet materials or other materials using an off-axis detector.

BACKGROUND

Many transparent, translucent, or other non-opaque materials are produced in long webs or sheets. One characteristic of these types of materials is haze, which refers generally to the scattering of light passing through the materials. Haze typically reduces the contrast of objects viewed through the materials. For example, haze in a plastic sheet used in product packaging might reduce the clarity of lettering viewed through the plastic sheet. Low haze may be important or essential for certain applications, such as consumer electronics packaging or medical device packaging.

Haze measurements typically occur in laboratory settings. For example, a sample of a material can be positioned against an entrance port of an integrating sphere, which can measure the haze of the sample. However, conventional laboratory instruments for measuring haze are typically not suitable for use in a manufacturing or processing environment. Moreover, conventional laboratory instruments for measuring haze are typically contact-type devices, meaning the devices must be placed in physical contact with a material.

SUMMARY

This disclosure provides an apparatus and method for measuring haze of sheet materials or other materials using an off-axis detector.

In a first embodiment, a method includes illuminating a material with first light along an optical path. The method also includes capturing an image of second light transmitted through the material using a first detector, where a first portion of the second light follows the optical path of the first light and a second portion of the second light diverges from the optical path. The method further includes capturing one or more measurements of third light using a second detector. The third light diverges from the optical path by a larger amount than the second portion of the second light, and the second detector is spaced apart from the first detector. In addition, the method includes determining one or more haze values associated with the material based on the image and the one or more measurements and at least one of storing and outputting the one or more haze values.

In a second embodiment, an apparatus includes at least one memory configured to store an image generated by illuminating a material with first light along an optical path. The image includes an image of second light transmitted through the material captured by a first detector, where a first portion of the second light follows the optical path of the first light and a second portion of the second light diverges from the optical path. The apparatus also includes at least one interface configured to receive one or more measurements of third light captured by a second detector that is spaced apart from the first detector. The third light diverges from the optical path by a larger amount than the second portion of the second light. The apparatus further includes at least one processor configured to determine one or more haze values associated with the material based on the image and the one or more measurements.

In a third embodiment, a system includes a light source configured to illuminate a material with first light along an optical path. The system also includes a first detector configured to capture an image of second light transmitted through the material, where a first portion of the second light follows the optical path of the first light and a second portion of the second light diverges from the optical path. The system further includes a second detector spaced apart from the first detector and configured to generate one or more measurements of third light diverging from the optical path by a larger amount than the second portion of the second light. In addition, the system includes an analyzer configured to determine one or more haze values associated with the material based on the image and the one or more measurements.

In a fourth embodiment, a non-transitory computer readable medium contains computer readable program code that, when executed by one or more processors, causes the one or more processors to obtain an image generated by illuminating a material with first light along an optical path. The image includes an image of second light transmitted through the material captured by a first detector, where a first portion of the second light follows the optical path of the first light and a second portion of the second light diverges from the optical path. The medium also contains computer readable program code that, when executed by the one or more processors, causes the one or more processors to obtain one or more measurements of third light captured by a second detector that is spaced apart from the first detector. The third light diverges from the optical path by a larger amount than the second portion of the second light. The medium further contains computer readable program code that, when executed by the one or more processors, causes the one or more processors to determine one or more haze values associated with the material based on the image and the one or more measurements.

Other technical features may be readily apparent to one skilled in the art from the following figures, descriptions, and claims.

BRIEF DESCRIPTION OF THE DRAWINGS

For a more complete understanding of this disclosure, reference is now made to the following description, taken in conjunction with the accompanying drawings, in which:

FIGURES 1 through 3 illustrate example systems for measuring haze of sheet materials or other materials according to this disclosure;
FIGURES 4A through 4C illustrate example images used for measuring haze of sheet materials or other materials according to this disclosure;
FIGURES 5 through 8 illustrate example variations for measuring haze of sheet materials or other materials according to this disclosure; and
FIGURE 9 illustrates an example method for measuring haze of sheet materials or other materials according to this disclosure.

DETAILED DESCRIPTION

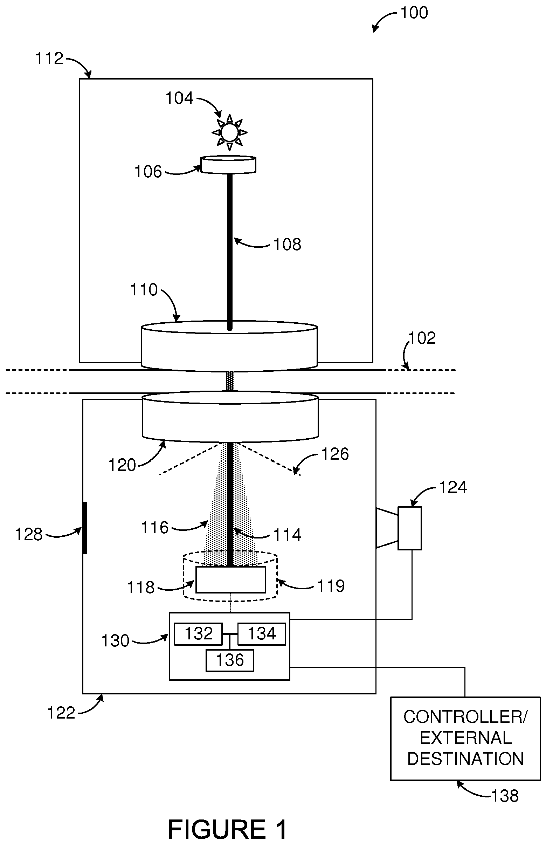

FIGURES 1 through 9, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

FIGURES 1 through 3 illustrate example systems for measuring haze of sheet materials or other materials according to this disclosure. As shown in FIGURE 1, a system 100 is used to measure the haze of a material 102. The material 102 here represents a moving web or sheet of non-opaque material, such as plastic. However, the material 102 could represent any other material(s) in any suitable form(s), such as glass.

In this example, the system 100 includes a light source 104 and optics 106 that are used to produce a collimated beam 108. The light source 104 represents any suitable source of illumination. For example, the light source 104 could include one or more monochrome or narrow-band sources, such as one or more light emitting diodes (LEDs) or lasers. The light source 104 could also include one or more polychrome sources or multiple narrow-band sources, such as multiple LEDs or lasers. The light source 104 could further include spectrally rich sources, such as xenon or other gas-discharge sources, incandescent sources, black body sources, or wide-band LEDs. The light source 104 could optionally include filters or other components for spectral shaping. The light source 104 could have continuous or pulsed operation, and any pulsing may be regular or irregular in its timing.

The optics 106 create the collimated beam 108 using the illumination provided by the light source 104. Any suitable optics 106 could be used, such as masks, lenses, mirrors, or prisms. The collimated beam 108 represents any suitable collimated beam of light. The collimated beam 108 could, for example, represent a beam of light with a circular cross-section having a diameter of at least 1mm. The collimated beam 108 may have a radially symmetric intensity distribution and a small divergence angle (such as less than 1°). The collimated beam 108 may strike the material 102 at any suitable angle, such as 90°.

A light trap 110 helps to ensure that ambient light is substantially excluded from the measurement location of the material 102. The light trap 110 could represent, for example, a suitable arrangement of baffles or annular light traps that exclude ambient light while providing an unhindered path for the collimated beam 108. A housing 112 can support the components used to produce the collimated beam 108 and can also block ambient light.

Light from the collimated beam 108 strikes the material 102 and is transmitted through the material 102, emerging as transmitted light. The transmitted light includes light 114 traveling along the same general path as the collimated beam 108, meaning this light was not substantially scattered by the material 102. The transmitted light also includes light 116 traveling along a canonical path that diverges away from the path of the collimated beam 108, meaning this light was scattered by the material 102 to a more significant degree. The canonical path could have a subtending angle of at least 10° at its apex, and the canonical path could intersect the material 102 over a larger area than the collimated beam 108. Note that the amount of light 114 and the amount of light 116 vary depending on the haze of the material 102.

The light 114 and 116 strikes an image detector 118, which captures an image of the light 114 and 116. The image detector 118 could, for example, measure the intensity of the light directly incident on each pixel of the detector 118. The image detector 118 could include pixels directly in line with the collimated beam 108 to measure the light 114 and additional pixels to measure the light 116. The image detector 118 may include an imaging area that is large enough to capture most or all of the light 116 within the canonical path.

The image detector 118 includes any suitable image capturing device or devices, such as a charge-coupled device (CCD), a complementary metal oxide semiconductor (CMOS) device, or a charge injection device (CID). In particular embodiments, the image detector 118 includes a two-dimensional detector array, such as an array of monochrome or RGB detectors. Also, the image detector 118 could have sufficient dynamic range so that pixels are not saturated during image measurements (even if all light from the collimated beam 108 strikes the pixels measuring the light 114). Other components could also be used with the image detector 118, such as an arbitrary spectral filter. Note that the light striking the image detector 118 could be unfocussed, although standard detector micro-optics or other non-focusing optics could be used. Also note that when a pulsed light source 104 is used, the image detector 118 can be synchronized with the light source 104 to capture images at the appropriate times. Because the image detector 118 captures images of light traveling along the optical path of the collimated beam 108, the image detector 118 is said to represent an on-axis detector, which captures on-axis measurements of the light 114 and 116.

A light trap 120 and a housing 122 help to ensure that ambient light is substantially excluded from the measurement location of the material 102. The light trap 120 could exclude ambient light while providing an unhindered path for the light 114 and 116 to the detector 118. The housing 122 could also support the components within the housing.

As shown in FIGURE 1, the system 100 also includes at least one off-axis detector 124, which is positioned at a location spaced apart from the path of (and therefor off-axis of) the collimated beam 108/light 114. The off-axis detector 124 measures an amount of light 126 that is highly scattered during passage through the material 102. For example, the light 126 could have a canonical path with a subtending angle of up to 60° or more at its apex. The off-axis detector 124 is located in a different position compared to the image detector 118 in order to obtain measurements of the strongly scattered light 126. In some embodiments, the off-axis detector 124 is aligned to capture measurements of the light 126 in a direction substantially orthogonal to the pathway of the collimated beam 108/light 114.

Haze in transparent or other materials can be caused by bubbles or other inclusions of different sizes, as well as by the total amount of bubbles or other inclusions that are present in the materials. The image detector 118 allows the determination of haze measurements in a univariate way by capturing images of the light 114-116. The addition of the off-axis detector(s) 124 allows an analysis that is at least bivariate. This bivariate analysis allows the system 100 to simultaneously detect the haze of the material 102 and the effect of the size of bubbles or other inclusions on the haze.

Each off-axis detector 124 includes any suitable light measuring device(s) or image capturing device(s), which could be the same as or different from the image detector 118. For example, each off-axis detector 124 could denote a zero dimensional (0D) imaging device having a single pixel, a one dimensional (1D) imaging device having a single row or a single column of pixels, or a two dimensional (2D) imaging device having at least one row and at least one column of pixels. An off-axis detector 124 may or may not measure focused light. In some embodiments, only an aggregate or average amount of light received by an off-axis detector 124 is used to measure haze, and the off-axis detector 124 or an external component that receives measurements from the off-axis detector 124 could identify the aggregate or average amount of light. While one off-axis detector 124 is shown here, multiple off-axis detectors 124 could also be used. When multiple off-axis detectors 124 are used, the outputs from those off-axis detectors 124 could be used individually or collectively, such as by averaging or accumulating the outputs from those off-axis detectors 124.

In some embodiments, each off-axis detector 124 is used in conjunction with a target 128. The target 128 can include a highly-reflective surface that is not in the light path of the collimated beam 108. The target 128 can help to direct additional light 126 towards the off-axis detector 124 for use in measuring the light 126. The target 128 includes any suitable structure having a reflective surface. To help to reduce or prevent light reflected from the target 128 impinging on the detector 118, there could be a light baffle or other structure 119 on at least one side of the detector 118, or the detector 118 can be geometrically arranged to minimize the effect of such reflections.

An analyzer 130 receives images captured by the image detector 118 and measurements from the off-axis detector(s) 124. The analyzer 130 analyzes this information to determine one or more haze measurements for the material 102. For example, as described in more detail below, the analyzer 130 could process a captured image by identifying an amount of light striking different regions of the image detector 118. As particular examples, the analyzer 130 could measure the amount of light in a central disc of the image and in one or more concentric regions around the disc, or the analyzer 130 could measure the amount of light in a specified area of the image and in one or more elliptical regions around or next to the specified area. These amounts of light can be used to calculate values such as raw haze, haze blur, and haze fuzz of the material 102. For instance, in some embodiments, measurements of light in different areas can be used to form one or more ratios, and the ratios can be used to calculate the haze measurements.

The analyzer 130 also uses the measurements from the off-axis detector(s) 124. For example, off-axis measurements from the off-axis detector(s) 124 can be combined with on-axis measurements associated with images from the image detector 118 to form two-dimensional or other multi-dimensional datasets. In some embodiments, the multi-dimensional datasets include (i) one or more ratios calculated using multiple regions in one or more images captured by the image detector 118 and (ii) one or more averaged or accumulated off-axis measurements calculated using measurements from the off-axis detector(s) 124. The multi-dimensional datasets can be used to compute haze measurements and optional auxiliary values. The auxiliary values could represent any suitable characteristics of the material 102, such as a typical size of inclusions in the material 102, a dispersion value for scattering of light by the material 102, or a strength of scattering of light by the material 102.

The calculation of the haze measurements and the optional auxiliary values could be done in any suitable manner. For example, a multi-dimensional dataset can be compared to at least one reference dataset to identify a haze measurement and an auxiliary value. The reference dataset can, for instance, be produced from a set of samples of known haze. There are various ways to produce a reference set and to identify a haze measurement and an optional auxiliary value from the reference set. As particular examples, a regular calibration using sample averages or a chemometric method using variations within a sample could be used. Also, as described below, the system could calculate directional haze measurements, meaning haze measurements that are calculated along different directions of the material 102. In these embodiments, there could be different reference datasets for different directions. Again, any suitable technique could be used to generate the different reference datasets for different directions.

In particular embodiments, the analyzer 130 uses a bivariate correlation developed in a laboratory setting to associate (i) ratios of light in different areas of obtained images and average/accumulated off-axis measurements with (ii) haze measurements and optional auxiliary values. The analyzer 130 can receive images from the image detector 118 and measurements from the off-axis detector 124, identify the ratios using the images, and identify averaged/accumulated off-axis measurements. The bivariate correlation can be used to convert this information into haze measurements and optional auxiliary values, which could be output from the analyzer 130.

Note that in this example, there is a single off-axis detector 124 shown in FIGURE 1. However, the use of more than one off-axis detector 124 is possible. For instance, multiple off-axis detectors 124 could be oriented at approximately 90° to one another, and the off-axis detectors 124 could largely be located in a plane that is substantially perpendicular to the on-axis measurement. When multiple off-axis measurements are available, haze measurements and optional auxiliary values could be computed for multiple directions, which may or may not coincide exactly with the directions of the off-axis measurements. It is also possible to estimate directional haze with off-axis measurements along a single direction.

The analyzer 130 includes any suitable structure for analyzing images and off-axis measurements to determine haze measurements. The analyzer 130 could, for example, include one or more processors 132 and one or more memories 134 storing instructions and data used, generated, or collected by the processors 132 (such as images captured by the image detector 118 and measurements from the off-axis detector 124). The analyzer 130 could also include one or more network interfaces 136 facilitating communication over one or more networks, such as an Ethernet interface.

Outputs from the analyzer 130 could be used in any suitable manner. For example, haze measurements and optional auxiliary values could be provided to a controller 138 in a manufacturing system that produces the material 102. The controller 138 could then adjust the production of the material 102 based on the haze measurements and optional auxiliary values. In this way, the haze measurements and optional auxiliary values provided by the analyzer 130 can be used to adjust pigments or process conditions (like temperature or pressure) used to produce the material 102. This may help to ensure that the haze of the material 102 stays within defined limits.

Note, however, that the system 100 could be used in other types of systems other than web or sheet manufacturing systems. For instance, the system 100 could be used as part of an inspection system for analyzing the material 102 during subsequent processing steps, such as before, during, or after printing operations or before, during, or after formation of the material into manufactured parts. The haze measurements and optional auxiliary values could also be provided to any other suitable destination 138, such as to a database or other memory for storage or to a display for graphical presentation to a user. The haze measurements and optional auxiliary values could be used for any other suitable purpose. Note that the analyzer 130 could represent a stand-alone component or could be incorporated into a component or system that uses the haze measurements and optional auxiliary values, such as when the analyzer 130 is implemented within the controller 138.

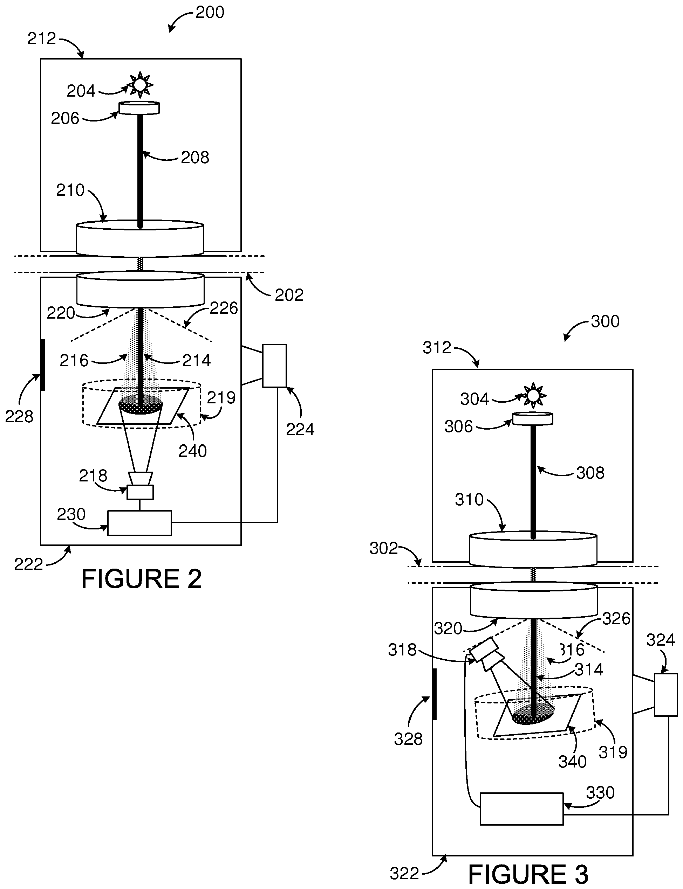

As shown in FIGURE 2, a system 200 is used to measure the haze of a material 202, such as a sheet. The system 200 includes a light source 204 and optics 206 that produce a collimated beam 208. The system 200 also includes a light trap 210 and a housing 212. Light from the collimated beam 208 emerges from the material 202 as light 214, light 216, and light 226. The system 200 further includes an image detector 218, a light trap 220, a housing 222, at least one off-axis detector 224, at least one optional target 228, and an analyzer 230. These elements could be the same as or similar to the corresponding elements in FIGURE 1. Although not shown, the analyzer 230 could be coupled to a controller or other external destination(s) 138.

In this example, the light 214 and 216 emerging from the material 202 is not provided directly to the image detector 218. Rather, the light 214 and 216 illuminates one side of a target surface 240, and the image detector 218 captures an image of the other side of the target surface 240. The target surface 240 can be optically thin so that the illumination by the light 214 and 216 on one side is minimally blurred or distorted when viewed from the other side. The target surface 240 may represent a flat surface that is generally parallel to the material 202. The target surface 240 could be formed from any suitable material(s), such as one or more highly diffuse translucent materials. To help to reduce or prevent light reflected from the target 228 impinging on the target surface 240, there could be a light baffle or other structure 219 on at least one side of the target surface 240, or the target 228 or the target surface 240 can be geometrically arranged to minimize the effect of such reflections.

As shown in FIGURE 3, a system 300 is used to measure the haze of a material 302. The system 300 includes a light source 304 and optics 306 producing a collimated beam 308. The system 300 also includes a light trap 310 and a housing 312. Light from the collimated beam 308 emerges from the material 302 as light 314, light 316, and light 326. The system 300 further includes an image detector 318, a light trap 320, a housing 322, at least one off-axis detector 324, at least one optional target 328, and an analyzer 330. These elements could be the same as or similar to the corresponding elements in FIGURES 1 and 2. Also, the analyzer 330 could be coupled to a controller or other external destination(s) 138.

In this example, the light 314 and 316 emerging from the material 302 is not provided directly to the image detector 318. Rather, the light 314 and 316 is reflected off a target surface 340 to the image detector 318. The target surface 340 may represent a generally flat surface that is parallel or at a slight or moderate angle to the material 302. The target surface 340 reflects the light 314 and 316 to the image detector 318, allowing the image detector 318 to be placed in a location that does not obstruct the light 314 and 316. The target surface 340 could be formed from any suitable material(s), such as one or more highly reflective materials. To help to reduce or prevent light reflected from the target 328 impinging on the target surface 340, there could be a light baffle or other structure 319 on at least one side of the target surface 340, or the target 328 or the target surface 340 can be geometrically arranged to minimize the effect of such reflections.

Note that the measurements from the off-axis detector(s) 124, 224, 324 in each system could be processed in any suitable manner to identify some measure of the highly scattering light from the material 102. For example, if a 0D off-axis detector is used, the outputs of the off-axis detector can be used directly as estimates of the strongly-scattered light exiting the material 102. If a 1D or 2D off-axis detector is used, the outputs of the off-axis detector can be used to estimate focused or unfocussed light by summing the outputs from various regions of the detector. These regions could be defined statically or dynamically. As a particular example, a region can be defined based on the centroid of detected light, and a summation can be made in a symmetric or other area around the centroid.

Although FIGURES 1 through 3 illustrate example systems 100-300 for measuring haze of sheet materials or other materials, various changes may be made to FIGURES 1 through 3. For example, any suitable number of light sources, optics, and collimated beams could be used to illuminate a material. Also, any suitable number of target surfaces, image detectors, off-axis detectors, targets, and analyzers could be used to measure and analyze light from the material. As an example, multiple off-axis detectors could be arranged at multiple angles in one or more planes substantially orthogonal to the collimated beam. Further, the arrangements and positions of the components in these figures are for illustration only. In addition, each system could include any other or additional components according to particular needs, such as mirrors, prisms, or other optics for folding a light path as needed.

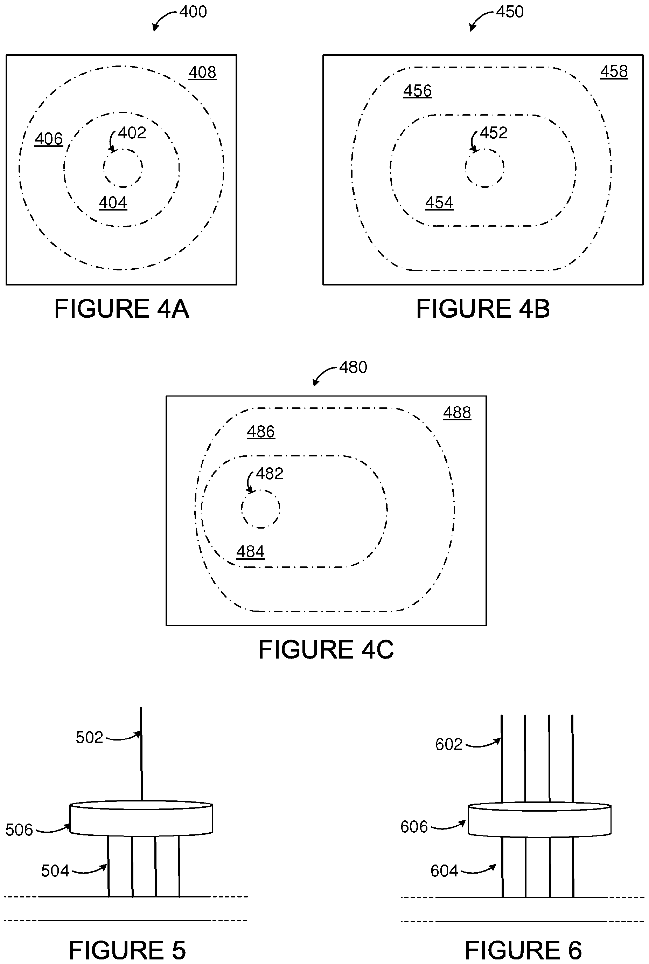

FIGURES 4A through 4C illustrate example images 400, 450, 480 used for measuring haze of sheet materials or other materials according to this disclosure. The images 400, 450, 480 shown in FIGURES 4A through 4C could, for example, be captured by any of the image detectors 118, 218, 318 in the systems of FIGURES 1 through 3.

As shown in FIGURE 4A, the image 400 can be divided into multiple regions 402-406. The region 402 represents a central disc or other area capturing light that has essentially passed directly through a material being examined. This light has therefore not been substantially scattered due to haze of the material. The regions 404-406 represent annular or other areas around the central region 402. These regions 404-406 capture light that has been scattered to differing degrees due to haze of the material. The image 400 may also include one or more excluded regions 408, where light in the excluded regions 408 is not analyzed.

Note that while the regions 402-406 are shown as being contiguous, there can optionally be annular or other spaces between these regions 402-406. Also note that while the regions 404-406 are shown as being annular, each of these regions could be replaced by a disc or other shape that includes more-inner regions. For example, the region 404 could be replaced by a disc that covers both the regions 402-404 in FIGURE 4A, and the region 406 could be replaced by a disc that covers all three regions 402-406 in FIGURE 4A. Further note that the sizes, shapes, and positions of the regions 402-406 may be static or dynamic. For instance, the regions 402-406 can be dynamically centered around the centroid of the image 400, the maximum of the image 400, or the maximum of a smoothed version of the image 400. Also, the extents of the regions 402-406 could be provided by an external source or calculated based on a radial falloff curve of the pixel values (which can be determined using various heuristics). Other or additional techniques could also be used to define the regions 402-406.

In FIGURE 4B, the image 450 is again divided into regions 452-456, and light in one or more excluded regions 458 may not be analyzed. The region 452 represents a disc or other area capturing light that has essentially passed directly through a material being examined, so this light has not been substantially scattered due to haze of the material. The regions 454-456 represent elliptical or other areas around or including the region 452. The regions 454-456 here are bilaterally symmetrical with respect to the region 452, meaning the regions 454-456 extend substantially the same distance from the region 452 in opposite directions. However, the regions 454-456 extend farther along one axis (horizontally in FIGURE 4B) than in an orthogonal axis (vertically in FIGURE 4B), which allows "directional" haze measurements to be obtained using the systems 100-300. That is, the use of regions extending farther in one direction allows the analyzers 130, 230, 330 to measure the scattering of light in one or more particular directions. The particular directions could support the identification of haze measurements in the machine direction (down the length of a sheet or web), in the cross direction (across the width of a sheet or web), or in any other desired direction(s).

Again, while the regions 452-456 are shown as being contiguous, there can optionally be annular or other spaces between these regions 452-456. Also, the regions 454-456 may or may not overlap, meaning the region 454 may or may not include the region 452 and the region 456 may or may not include the regions 452-454. Further, the sizes, shapes, and positions of the regions 452-456 may be static or dynamic, such as when the regions 452-456 can be dynamically centered around the centroid of the image 450, the maximum of the image 450, or the maximum of a smoothed version of the image 450. Also, characteristics of the regions 452-456 could be provided by an external source or calculated based on a radial falloff curve of the pixel values (which can be determined using various heuristics). Other or additional techniques could also be used to define the regions 452-456.

In FIGURE 4C, the image 480 is again divided into regions 482-486, and light in one or more excluded regions 488 may not be analyzed. The region 482 represents a disc or other area capturing light that has essentially passed directly through a material being examined, so this light has not been substantially scattered due to haze of the material. The regions 484-486 represent elliptical or other areas around or including the region 482. The regions 484-486 here, however, extend further to one side of the region 482 than the other side of the region 482. The regions 484-486 therefore are non-bilaterally symmetrical with respect to the region 482, but the regions 484-486 still extend farther along one axis (horizontally in FIGURE 4C) than in an orthogonal axis (vertically in FIGURE 4C), allowing "directional" haze measurements to be obtained using the systems 100-300. The particular directions could support the identification of haze measurements in the machine direction, in the cross direction, or in any other desired direction(s).

Once again, while the regions 482-486 are shown as being contiguous, there can optionally be annular or other spaces between these regions 482-486. Also, the regions 484-486 may or may not overlap, meaning the region 484 may or may not include the region 482 and the region 486 may or may not include the regions 482-484. Further, the sizes, shapes, and positions of the regions 482-486 may be static or dynamic, such as when the regions 482-486 can be dynamically centered around the centroid of the image 480, the maximum of the image 480, or the maximum of a smoothed version of the image 480. While the region 484 is shown as completely encompassing or including the region 482, the region 484 could be located only at one or more (but not all) sides of the region 482, and the same can be true for the region 486 with respect to the region 484 or the region 482. Also, characteristics of the regions 482-486 could be provided by an external source or calculated based on a radial falloff curve of the pixel values (which can be determined using various heuristics). Other or additional techniques could also be used to define the regions 482-486.

In some embodiments, to process the image 400, 450, or 480, an analyzer can add the pixel values in each region 402-406, 452-456, or 482-486 to produce a sum for that region. Pixels that straddle a boundary between two regions could be handled in various ways. For example, those pixels could be omitted from the analysis. As another example, each pixel could be included in the region where the pixel's center is located. As a third example, a pixel can be fractionally included in both regions based on the percentage of the pixel in each region. As a fourth example, weighting factors can be applied to the pixels in a region before summing them. Weighting factors can be used, for instance, to reduce the effect of pixels that are near the boundaries of a region or that are in more than one region. Weighting factors can also be used to increase the effect of pixels that are not close to a region boundary or that are in only one region.

The sums associated with the regions 402-406, 452-456, or 482-486 can then be used to calculate one or more initial haze measurements. For example, raw haze represents the amount of diffused light in at least one non-central region divided by the total amount of light. One example raw haze value can be calculated as:

$$Raw\,Haze = \frac{Sum(R_2) + Sum(R_3)}{Sum(R_1) + Sum(R_2) + Sum(R_3)} \qquad (1)$$

where $Sum(R_1)$ represents the sum of pixel values in the region 402, 452, or 482, $Sum(R_2)$ represents the sum of pixel values in the region 404, 454, or 484, and $Sum(R_3)$ represents the sum of pixel values in the region 406, 456, or 486. Multiple raw haze values could be computed by omitting one of $Sum(R_2)$ and $Sum(R_3)$ in the numerator of Equation (1) or by using different definitions of the regions 402-406, 452-456, or 482-486. In particular embodiments, each raw haze value could be converted into a corrected raw haze value using one or more calibration curves, which can be obtained by taking measurements of raw haze using one or more standards of known haze.

Other initial haze measurements could include haze blur and haze fuzz. Haze blur represents a ratio of slightly diffused light to essentially direct light, which can be expressed as:

$$Haze\ Blur = \frac{Sum(R_2)}{Sum(R_1)} . \qquad (2)$$

Haze fuzz represents a ratio of moderately diffused light to slightly diffused light, which can be expressed as:

$$Haze\ Fuzz = \frac{Sum(R_3)}{Sum(R_2)} . \qquad (3)$$

Any other or additional initial haze measurements could be used here, such as other measurements based on ratios involving single regions or combinations of regions in the image 400, 450, or 480. Calibration curves could also be used to produce corrected haze blur and haze fuzz measurements.

These initial haze measurements can be useful, but as noted above haze can be caused by bubbles or inclusions of different sizes, as well as by the total amount of bubbles or other inclusions that are present in material. In some instances, the initial haze measurements above do not provide an accurate measure of the haze of the material 102 due to larger than expected bubbles or other inclusions in the material 102. These larger than expected inclusions cause greater off-axis scattering of the light from the collimated beam. By using one or more off-axis detectors to measure the off-axis scattering of the light from the collimated beam, the initial haze measurements above could be modified (such as based on laboratory or other known correlations), or the initial haze measurements could be output along with the off-axis measurements. In either case, an external controller or other system (or even human personnel) could use this data to make decisions regarding the material 102, such as how to modify a manufacturing or processing system.

Although FIGURES 4A through 4C illustrate examples of images 400, 450, and 480 used for measuring haze of sheet materials or other materials, various changes may be made to FIGURES 4A through 4C. For example, the images 400, 450, and 480 could each include any suitable number of regions, and those regions could have any suitable size, shape, and position. Also, the images 400, 450, and 480 could be analyzed in any other suitable manner.

FIGURES 5 through 8 illustrate example variations for measuring haze of sheet materials or other materials according to this disclosure. As shown in FIGURE 5, a single light beam 502 could be divided into multiple collimated beams 504 using optics 506. The optics 506 could, for example, represent a beam splitter and a collimator. The beam splitter could include diffractive optics, prisms, mirrors, or other components. Each of the collimated beams 504 could be incident on a different area of the material being examined, such as by forming a linear or grid pattern or other spatial pattern. The collimated beams 504 may or may not have the same characteristics, such as diameter or intensity.

As shown in FIGURE 6, multiple light beams 602 could be collimated to produce multiple collimated beams 604 using optics 606. The light beams 602 could include monochrome or polychrome beams. The optics 606 could, for example, represent a collimator and may optionally include a beam splitter. Again, each of the collimated beams 604 could be incident on a different area of the material being examined. Also, the collimated beams 604 may or may not have the same characteristics, such as spectrum or polarization.

In either case, the analysis of the material may be performed using images of multiple areas of the material (where the multiple light beams 504 or 604 are transmitted through the material). Also, when directional haze measurements are being determined, different areas of the images being analyzed could be divided into regions oriented in the same direction or in different directions.

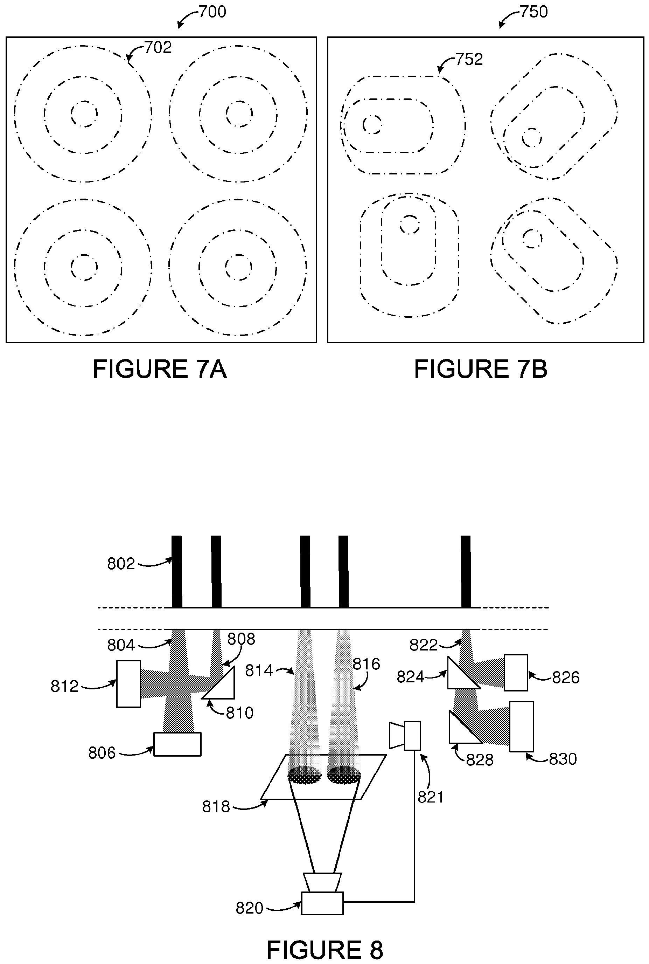

FIGURES 7A and 7B illustrate example images 700 and 750 used for measuring haze of sheet materials or other materials. In FIGURE 7A, the image 700 includes multiple sets 702 of regions. The regions in each set 702 are similar to those shown in FIGURE 4A, but there are now four sets 702 of those regions. Haze measurements can be determined for each set 702 of regions and modified or output with off-axis measurements. Note that each set 702 can be associated with its own beam(s) of light and that one or multiple image detectors could be used to capture images of the sets 702. If a single detector is used, the image 700 can be segmented into different sections (each containing one set 702), where the segmentation can be static or dynamic. Each set 702 could be associated with its own off-axis measurements, or common off-axis measurements could be used for all sets 702.

In FIGURE 7B, the image 750 includes multiple sets 752 of regions. The regions in each set 752 are similar to those shown in FIGURE 4C, but there are now four sets 752 of those regions, and some of the sets 752 are oriented at different angles. Haze measurements can be determined for each set 752 of regions and modified or output with off-axis measurements. Note that each set 752 can be associated with its own beam(s) of light and that one or multiple image detectors could be used to capture images of the sets 752. If a single detector is used, the image 750 can be segmented into different sections (each containing one set 752), where the segmentation can be static or dynamic. Each set 752 could be associated with its own off-axis measurements, or common off-axis measurements could be used for all sets 752. While shown here as using the regions of FIGURE 4C, the regions of FIGURE 4B could also be used in the same or similar manner.

When used with the technique in FIGURE 5, the analysis of the image 700 or 750 may identify spatial variations of the haze in the material. When used with the technique in FIGURE 6, the analysis of the image 700 or 750 may identify variations of the haze based on changes in beam properties (such as wavelength or polarization). Note that while the sets 752 are oriented at four different angles here, the sets 752 could be oriented at one or more angles.

FIGURE 8 illustrates another example system 800 for measuring haze of sheet materials or other materials. In this example, a material is illuminated using multiple collimated beams 802. Light 804 associated with a first (monochrome) collimated beam is provided to an unfocussed monochrome image detector 806. Light 808 associated with a second (polychrome) collimated beam is reflected off a mirror 810 and provided to an unfocussed polychrome image detector 812. Light 814-816 associated with third and fourth (monochrome) collimated beams is provided to a translucent target surface 818, and an image detector with focused optics 820 captures an image on the target surface 818. At least one off-axis detector 821 can be used in conjunction with the image detector 820, although one or more off-axis detectors could be used in conjunction with one or more other image detectors in FIGURE 8.

Light 822 associated with a fifth (polychrome) collimated beam is divided by a dichroic mirror 824, which provides part of the light 822 to an unfocussed image detector 826. The other part of the light 822 is reflected off a mirror 828 and provided to another unfocussed image detector 830.

As can be seen in FIGURES 5 through 8, a wide variety of techniques can be used to illuminate a material, direct light to or from the material, and measure light from the material (including strongly-scattered light from the material). In general, light transmitted through a material can be detected by one or multiple image detectors and may optionally be split, and strongly-scattered light from the material can be measured using one or more off-axis detectors. Splitting using mirrors or prisms can be done so that each of multiple image detectors receives light from a different portion of the material. Splitting using gratings, dichroic mirrors, or filters can be done so that each of multiple image detectors receives light having different spectral characteristics. Each image detector can receive light from one or more illuminated areas of a material (such as the full canonical light from each illuminated area), and the image detectors may or may not be similar. The image detectors could differ in image scale, number of pixels, spectral sensitivity (whether monochrome or polychrome), and focusing optics (or lack thereof). In addition, polychrome light can be imaged in various ways, such as by integrating the light using a monochrome detector (optionally with bandpass or bandstop filters). The polychrome light can also be divided among multiple detectors receiving light in different spectral ranges (via filters or gratings). Spectral filters could be incorporated directly into photosensitive elements of an image detector, such as when a Bayer mask is used on a CCD, CMOS, or CID array.

Although FIGURES 5 through 8 illustrate example variations for measuring haze of sheet materials or other materials, various changes may be made to FIGURES 5 through 8. For example, any individual or subset of these variations could be used in any given situation. Also, a wide variety of other variations could also be made.

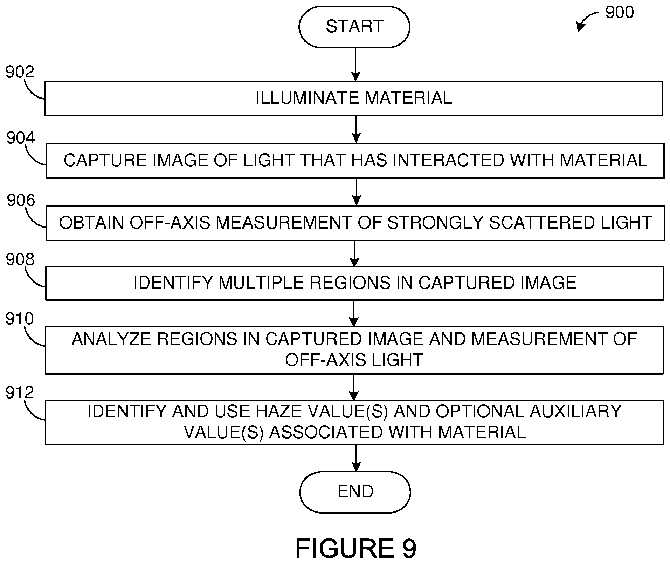

FIGURE 9 illustrates an example method 900 for measuring haze of sheet materials or other materials according to this disclosure. The method 900 could, for example, be performed by the analyzer 130, 230, 330 in any of the systems shown in FIGURES 1 through 3. However, the method 900 could be used by any other suitable device and in any other suitable system.

As shown in FIGURE 9, a material is illuminated at step 902. This could include, for example, illuminating a sheet of material using one or more collimated beams of light.

An image of light that has interacted with the material is captured at step 904, and at least one off-axis measurement of strongly scattered light is obtained at step 906. This could include, for example, capturing a monochrome or polychrome image of the light that has been transmitted through the sheet of material. The light can be received directly or indirectly from the material. This could also include receiving one or multiple off-axis measurements from one or more off-axis detectors. If multiple off-axis measurements are obtained, the measurements could be averaged, accumulated, or processed in any other suitable manner.

Multiple regions are identified in the captured image at step 908. This could include, for example, identifying static or dynamic regions in the image. The regions could include a central disc as well as outer annual regions (or larger discs) or a specified area and elliptical regions that may or may not include the specified area. However, any other suitable regions could be defined or used.

The regions in the image and the off-axis measurements are analyzed at step 910, and one or more haze values (and optionally one or more auxiliary values) are identified and used at step 912. This could include, for example, summing the values of the pixels in each region to determine a total sum for that region, where pixels spanning multiple regions could be handled in any suitable manner. This could also include using the sums associated with the different regions to calculate initial raw haze, haze blur, and haze fuzz values. This may further include using one or more calibration curves to adjust the initial haze measurements. In addition, this could include using reference datasets or other information to identify one or more final haze measurements and one or more optional auxiliary values based on the off-axis measurements. The optional auxiliary value(s) could represent any suitable characteristic(s) of the material, such as typical inclusion size or a dispersion value or a strength of scattering of light by the material. The haze measurements and auxiliary values could then be stored, output to a process controller or other destination, used to modify or control a production process, or used in any other suitable manner.

Although FIGURE 9 illustrates one example of a method 900 for measuring haze of sheet materials or other materials, various changes may be made to FIGURE 9. For example, as noted above, a number of variations could be used for illuminating a material, measuring light from the material, and analyzing the results. Also, while shown as a series of steps, various steps in FIGURE 9 could overlap, occur in parallel, or occur multiple times.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in this patent document should not be read as implying that any particular element, step, or function is an essential or critical element that must be included in the claim scope. Also, none of the claims is intended to invoke 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," "processing device," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

**Claims**

1. A method comprising:

   illuminating (902) a material (102, 202, 302) with first light (108, 208, 308, 504, 604, 802) along an optical path;
   capturing (904) an image (400, 450, 480, 700, 750) of second light (114-116, 214-216, 314-316, 804, 808, 814, 816, 822) transmitted through the material using a first detector (118, 218, 318, 806, 812, 820, 826, 830), a first portion of the second light following the optical path of the first light and a second portion of the second light diverging from the optical path;
   capturing (906) one or more measurements of third light (126, 226, 326) using a second detector (124, 224, 324, 821), the third light diverging from the optical path by a larger amount than the second portion of the second light, the second detector spaced apart from the first detector;
   determining (912) one or more haze values associated with the material based on the image and the one or more measurements; and
   at least one of storing and outputting (912) the one or more haze values.

2. The method of Claim 1, wherein the second detector is located in a plane that is perpendicular to the optical path.

3. The method of Claim 1, further comprising:

   identifying (912) one or more auxiliary values using the one or more measurements, the one or more auxiliary values identifying at least one of: a typical size of inclusions in the material, an amount of dispersion of light by the material, and a strength of scattering of light by the material.

4. The method of Claim 1, wherein determining the one or more haze values comprises:

   identifying (908) multiple regions (402-406, 452-456, 482-486, 702, 752) of the image;
   summing pixel values in each region of the image to produce a total pixel value for that region; and
   determining the one or more haze values using the total pixel values for the regions.

5. The method of Claim 4, wherein the multiple regions of the image comprise:

   a first region (402) comprising a first disc;
   a second region (404) comprising either (i) a first annular region around the first region or (ii) a second disc larger than and including the first disc; and
   a third region (406) comprising either (i) a second annular region around the second region or (ii) a third disc larger than and including the first and second discs.

6. The method of Claim 4, wherein the multiple regions of the image comprise:

   a first region (482); and
   a second region (484,486) extending farther to one side of the first region than to an opposite side of the first region such that the second region is non-symmetrical about the first region.

7. The method of Claim 4, wherein the multiple regions of the image comprise:

   a first region (452); and
   a second region (454, 465) extending farther along one axis of the image than along an orthogonal axis of the image, the second region bilaterally symmetrical with respect to the first region.

8. The method of Claim 1, wherein determining the one or more haze values comprises determining multiple directional haze values, each directional haze value representing an amount of haze of the material along a particular direction, different directional haze values associated with different directions.

9. An apparatus comprising:

   at least one memory (134) configured to store an image (400, 450, 480, 700, 750) generated by illuminating a material (102, 202, 302) with first light (108, 208, 308, 504, 604, 802) along an optical path, the image comprising an image of second light (114-116, 214-216, 314-316, 804, 808, 814, 816, 822) transmitted through the material captured by a first detector (118, 218, 318, 806, 812, 820, 826, 830), a first portion of the second light following the optical path of the first light and a second portion of the second light diverging from the optical path;
   at least one interface (136) configured to receive one or more measurements of third light (126, 226, 326) captured by a second detector (124, 224, 324, 821) that is spaced apart from the first detector, the third light diverging from the optical path by a larger amount than the second portion of the second light; and
   at least one processor (132) configured to determine one or more haze values associated with the material based on the image and the one or more measurements.

10. The apparatus of Claim 9, wherein the at least one processor is further configured to identify one or more auxiliary values using the one or more measurements, the one or more auxiliary values identifying at least one of: a typical size of inclusions in the material, an amount of dispersion of light by the material, and a strength of scattering of light by the material.

11. The apparatus of Claim 9, wherein the at least one processor is configured to determine the one or more haze values by:

    identifying multiple regions (402-406, 452-456, 482-486, 702, 752) of the image;

summing pixel values in each region of the image to produce a total pixel value for that region; and determining the one or more haze values using the total pixel values for the regions.

12. The apparatus of Claim 11, wherein the multiple regions of the image comprise:

a first region (482); and
a second region (484,486) extending farther to one side of the first region than to an opposite side of the first region such that the second region is non-symmetrical about the first region.

13. The apparatus of Claim 11, wherein the multiple regions of the image comprise:

a first region (452); and
a second region (454, 456) extending farther along one axis of the image than along an orthogonal axis of the image, the second region bilaterally symmetrical with respect to the first region.

14. A system comprising:

a light source (104,204, 304) configured to illuminate a material (102,202, 302) with first light (108, 208, 308, 504, 604, 802) along an optical path;
a first detector (118, 218, 318, 806, 812, 820, 826, 830) configured to capture an image of second light (114-116, 214-216, 314-316, 804, 808, 814, 816, 822) transmitted through the material, a first portion of the second light following the optical path of the first light and a second portion of the second light diverging from the optical path;
a second detector (124, 224, 324, 821) spaced apart from the first detector and configured to generate one or more measurements of third light (126,226,326) diverging from the optical path by a larger amount than the second portion of the second light; and
an analyzer (130, 230, 330) configured to determine one or more haze values associated with the material based on the image and the one or more measurements.

15. A non-transitory computer readable medium containing computer readable program code that, when executed by one or more processors, causes the one or more processors to:

obtain (904) an image (400, 450, 480, 700, 750) generated by illuminating a material (102, 202, 302) with first light (108, 208, 308, 504, 604, 802) along an optical path, the image comprising an image of second light (114-116, 214-216, 314-316, 804, 808, 814, 816, 822) transmitted through the material captured by a first detector (118, 218, 318, 806, 812, 820, 826, 830), a first portion of the second light following the optical path of the first light and a second portion of the second light diverging from the optical path;
obtain (906) one or more measurements of third light (126,226,326) captured by a second detector (124, 224, 324, 821) that is spaced apart from the first detector, the third light diverging from the optical path by a larger amount than the second portion of the second light; and
determine (912) one or more haze values associated with the material based on the image and the one or more measurements.

FIGURE 1

FIGURE 2

FIGURE 3

400

408

406 402

404

FIGURE 4A

450

458

456

452

454

FIGURE 4B

480

488

486

482

484

FIGURE 4C

502

506

504

FIGURE 5

602

606

604

FIGURE 6

FIGURE 7A

FIGURE 7B

FIGURE 8

START

900

902 — ILLUMINATE MATERIAL

904 — CAPTURE IMAGE OF LIGHT THAT HAS INTERACTED WITH MATERIAL

906 — OBTAIN OFF-AXIS MEASUREMENT OF STRONGLY SCATTERED LIGHT

908 — IDENTIFY MULTIPLE REGIONS IN CAPTURED IMAGE

910 — ANALYZE REGIONS IN CAPTURED IMAGE AND MEASUREMENT OF OFF-AXIS LIGHT

912 — IDENTIFY AND USE HAZE VALUE(S) AND OPTIONAL AUXILIARY VALUE(S) ASSOCIATED WITH MATERIAL

END

# FIGURE 9

Europäisches
Patentamt

European
Patent Office

Office européen
des brevets

## EUROPEAN SEARCH REPORT

Application Number

EP 16 19 2960

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/226524 A1 (SHAKESPEARE TARJA T [FI] ET AL) 9 September 2010 (2010-09-09) | 1,4-9, 11-15 | INV. G01N21/896 |
| Y | * paragraph [0031] - paragraph [0035]; claim 1; figures 1-9 * | 2,3,10 | G01N21/47 G01N21/59 G01N21/958 |
| Y | US 2010/188651 A1 (KOSTUCH GREGORY D [US] ET AL) 29 July 2010 (2010-07-29) * paragraph [0027] - paragraph [0031]; figure 1 * | 2 | G01N21/892 |
| X | "Haze-gard plus, operating instructions (BYK-Gardner)", INTERNET CITATION, 1 December 2010 (2010-12-01), page 1, XP002629354, Retrieved from the Internet: URL:http://www.byk.com/fileadmin/BYK/downl oads_support/public/Manuals/Appearance/Tra nsparency/haze-gard%20plus/Full%20Version/ 238013796_EDFI_0805.pdf [retrieved on 2011-11-04] * page 30 - page 33; figures 1, 2 * -& Byk-Gardner Gmbh ET AL: "Transmission Haze", , 10 December 2010 (2010-12-10), XP055345189, Retrieved from the Internet: URL:https://www2.unece.org/wiki/download/a ttachments/4064353/IGPG-TF wiper-SG2-02-01e.pdf?api=v2 [retrieved on 2017-02-13] * page 5 - page 6 * | 1-3,9, 10,14,15 | |

TECHNICAL FIELDS
SEARCHED (IPC)

G01N

-/--

The present search report has been drawn up for all claims

| Place of search | Date of completion of the search | Examiner |
|---|---|---|
| Berlin | 16 February 2017 | Koll, Hermann |

EPO FORM 1503 03.82 (P04C01)

Europäisches
Patentamt

European
Patent Office

Office européen
des brevets

# EUROPEAN SEARCH REPORT

Application Number

EP 16 19 2960

## DOCUMENTS CONSIDERED TO BE RELEVANT

| Category | Citation of document with indication, where appropriate, of relevant passages | Relevant to claim | CLASSIFICATION OF THE APPLICATION  (IPC) |
|---|---|---|---|
|  | -& SHEN W ET AL:  "Characterization of mar/scratch resistance of coatings with a Nano-indenter and a scanning probe microscope", TRIBOLOGY INTERNATIONAL, ELSEVIER, AMSTERDAM, NL, vol. 39, no. 2, 1 February 2006 (2006-02-01), pages 146-158, XP027881244, ISSN: 0301-679X [retrieved on 2006-02-01] * page 153, column 1, paragraph 3 - page 154, paragraph 3 * ----- |  |  |
| Y | US 2013/242083 A1 (POTTS TIMOTHY A [US] ET AL) 19 September 2013 (2013-09-19) * paragraph [0070] - paragraph [0073]; figures 9A-9C * ----- | 3,10 |  |
| A | "STANDARD TEST METHOD FOR HAZE AND LUMINOUS TRANSMITTANCE OF TRANSPARENT PLASTICS", ASTM DESIGNATION, ASTM INTERNATIONAL, US, vol. D1003, 1 July 2000 (2000-07-01), pages 1-06, XP001179974, * figures 1, 2 * ----- | 1-15 | **TECHNICAL FIELDS SEARCHED      (IPC)** |
| A | US 2011/194113 A1 (SAKAI SATOSHI [JP] ET AL) 11 August 2011 (2011-08-11) * abstract; figure 1 * ----- | 1-15 |  |
| A | US 5 760 890 A (LEX KONRAD [DE] ET AL) 2 June 1998 (1998-06-02) * abstract; figures 1-3 * ----- | 1-15 |  |

The present search report has been drawn up for all claims

| Place of search | Date of completion of the search | Examiner |
|---|---|---|
| Berlin | 16 February 2017 | Koll, Hermann |

EPO FORM 1503 03.82 (P04C01)

## ANNEX TO THE EUROPEAN SEARCH REPORT
## ON EUROPEAN PATENT APPLICATION NO.

EP 16 19 2960

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2017

| Patent document cited in search report | | Publication date | Patent family member(s) | | Publication date |
|---|---|---|---|---|---|
| US 2010226524 | A1 | 09-09-2010 | CA | 2754822 A1 | 16-09-2010 |
| | | | CN | 102422148 A | 18-04-2012 |
| | | | EP | 2406618 A2 | 18-01-2012 |
| | | | US | 2010226524 A1 | 09-09-2010 |
| | | | WO | 2010104699 A2 | 16-09-2010 |
| US 2010188651 | A1 | 29-07-2010 | BR | PI0811794 A2 | 11-11-2014 |
| | | | CN | 101680837 A | 24-03-2010 |
| | | | EP | 2171430 A1 | 07-04-2010 |
| | | | JP | 5314015 B2 | 16-10-2013 |
| | | | JP | 2010533865 A | 28-10-2010 |
| | | | KR | 20100033487 A | 30-03-2010 |
| | | | US | 2010188651 A1 | 29-07-2010 |
| | | | WO | 2009014866 A1 | 29-01-2009 |
| US 2013242083 | A1 | 19-09-2013 | CA | 2851538 A1 | 12-04-2012 |
| | | | EP | 2625508 A2 | 14-08-2013 |
| | | | JP | 2013539052 A | 17-10-2013 |
| | | | US | 2013242083 A1 | 19-09-2013 |
| | | | WO | 2012048186 A2 | 12-04-2012 |
| US 2011194113 | A1 | 11-08-2011 | CN | 102165282 A | 24-08-2011 |
| | | | EP | 2402713 A1 | 04-01-2012 |
| | | | JP | 4796160 B2 | 19-10-2011 |
| | | | JP | 2010203813 A | 16-09-2010 |
| | | | US | 2011194113 A1 | 11-08-2011 |
| | | | WO | 2010097971 A1 | 02-09-2010 |
| US 5760890 | A | 02-06-1998 | DE | 19628250 A1 | 23-01-1997 |
| | | | DE | 29511344 U1 | 14-11-1996 |
| | | | JP | H0933435 A | 07-02-1997 |
| | | | US | 5760890 A | 02-06-1998 |

EPO FORM P0459

For more details about this annex : see Official Journal of the European Patent Office, No. 12/82